# FASCICULE DE BREVET EUROPEEN

(11) **EP 3 368 349 B1**
(45) Date de publication et mention de la délivrance du brevet: **22.07.2020**
(21) Numéro de dépôt: 16785512.1
(22) Date de dépôt: 26.10.2016
(51) Int. Cl.: B60C 11/12, B60C 9/22, B60C 9/00, B60C 11/03, B60C 9/20

(54) **PNEUMATIQUE À COUCHES DE TRAVAIL COMPRENANT DES MONOFILAMENTS ET À BANDE DE ROULEMENT INCISÉE**
LUFTREIFEN MIT ARBEITSSCHICHTEN AUS MONOFILAMENTEN UND EINER REIFENLAUFFLÄCHE MIT EINSCHNITTEN
PNEUMATIC TIRE, HAVING WORKING LAYERS COMPRISING MONOFILAMENTS AND A TIRE TREAD WITH INCISIONS

(30) Priorité: 27.10.2015 FR 1560234
(43) Date de publication de la demande: 05.09.2018
(73) Titulaire: Compagnie Générale des Etablissements Michelin, 63000 Clermont-Ferrand (FR)
(72) Inventeur: BONNET, Aymeric, 63040 Clermont-Ferrand Cedex 9 (FR); DEROBERT-MAZURE, Jean-Charles, 63040 Clermont-Ferrand Cedex 9 (FR); MOREL-JEAN, Jacques, 63040 Clermont-Ferrand Cedex 9 (FR)
(74) Mandataire: Millanvois, Patrick Jacques Jean
(86) Numéro de dépôt international: PCT/EP2016/075721
(87) Numéro de publication internationale: WO 2017/072136

(56) Documents cités:
- EP-A2- 2 769 854
- WO-A1-2015/014575
- WO-A1-2015/016051
- DE-A1-102010 060 946
- FR-A1- 3 032 149

## Description

### DOMAINE DE L'INVENTION

La présente invention concerne un pneumatique de véhicule de tourisme et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est appelée surface de roulement et dont la plus radialement intérieure est appelée surface de fond de sculpture. De plus, la bande de roulement d'un pneumatique est délimitée, selon la direction axiale, par deux surfaces latérales. La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail, comprenant au moins une couche de travail composée d'éléments de renforcement parallèles entre eux et formant, avec la direction circonférentielle, un angle compris entre 15° et 50°. L'armature de sommet peut également comprendre au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement. Un puits n'a sur la surface de roulement aucune dimension principale caractéristique. Une incision ou une rainure présente, sur la surface de roulement deux dimensions principales caractéristiques : une largeur W et une longueur Lo, telle que la longueur Lo est au moins égale à 2 fois sa largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

Par définition, une incision ou une rainure qui est délimitée par :
- uniquement deux faces latérales principales, est dite débouchante,
- par trois faces latérales, dont deux principales déterminant la longueur de la découpure, est dite borgne,
- par quatre faces latérales, dont deux principales déterminant la longueur de la découpure, est dite aveugle.

La différence entre une incision et une rainure est la valeur prise par la distance moyenne séparant les deux faces latérales principales de la découpure, à savoir sa largeur W. Dans le cas d'une incision, cette distance est appropriée pour permettre la mise en contact des deux faces latérales principales en vis-à-vis lors du passage de l'incision dans le contact avec la chaussée. Dans le cas d'une rainure, les faces latérales principales de cette rainure ne peuvent pas venir en contact l'une contre l'autre dans les conditions usuelles de roulage. Cette distance pour une incision est généralement pour les pneumatiques de véhicule de tourisme au plus égale à 1 millimètre (mm). Un sillon circonférentiel est une découpure de direction sensiblement circonférentielle, sensiblement continue, sur toute la circonférence du pneumatique.

Plus précisément, la largeur W est la distance moyenne, déterminée sur la longueur de la découpure et sur une portion radiale de la découpure comprise entre une première surface circonférentielle, radialement intérieure à la surface de roulement à une distance radiale de 1 mm, et une deuxième surface circonférentielle, radialement extérieure à la surface de fond à une distance radiale de 1 mm, afin d'éviter tout problème de mesure liée au raccordement deux faces latérales principales avec la surface de roulement et la surface de fond.

La profondeur de la découpure est la distance radiale maximale entre la surface de roulement et le fond de la découpure. La valeur maximale des profondeurs des découpures est nommée profondeur de sculpture D. La surface de fond de sculpture est définie comme la surface translatée de la surface de roulement radialement vers l'intérieur d'une distance radiale égale à la profondeur de sculpture.

### ETAT DE LA TECHNIQUE

Dans le contexte actuel de développement durable, l'économie de ressources et donc de matières premières est un des objectifs majeurs des industriels. Pour les pneumatiques de véhicule de tourisme, une des voies de recherche pour cet objectif, consiste à remplacer les câbles métalliques habituellement utilisés comme éléments de renforcement de différentes couches de l'armature de sommet par des fils unitaires ou monofilaments tels que décrits dans le document EP 0043563 dans lequel ce type d'éléments de renforcement est utilisé dans un double objectif de gain de masse et de résistance au roulement.

Cependant l'utilisation de ce type d'éléments de renforcement présente l'inconvénient d'entraîner un problème de flambement en compression amenant une endurance insuffisante du pneumatique comme le décrit le document EP2537686**.** Ainsi que le décrit ce même document, l'homme de l'art propose une disposition particulière des différentes couches de l'armature de sommet, une qualité spécifique des matériaux composant les éléments de renforcement de l'armature de sommet pour résoudre ce problème.

Une fine analyse du phénomène physique montre que le flambage des monofilaments a lieu dans les parties les plus axialement extérieures de la bande de roulement sous les découpures comme le mentionne le document JP 2012071791**.** Cette zone du pneumatique a comme particularité d'être soumise à des efforts de compression élevés dans les trajectoires courbes du véhicule. La résistance au flambement des monofilaments dépend de la géométrie des découpures, montrant ainsi l'influence étonnante de la sculpture sur l'endurance des monofilaments.

Le document WO2015/014575 montre un pneumatique avec une armature de sommet similaire à celle de l'invention mais reste silencieux par rapport au type d'incisions ou rainures de la bande de roulement.

### EXPOSE DE L'INVENTION

L'objectif principal de la présente invention est donc d'augmenter l'endurance d'un pneumatique dont les éléments de renforcement des couches de travail sont composés de monofilaments par la conception d'une sculpture de la bande de roulement adaptée.

Cet objectif est atteint par un pneumatique pour véhicule de tourisme, comprenant :
- une bande de roulement destinée à entrer en contact avec un sol par l'intermédiaire d'une surface de roulement et ayant une largeur axiale LT,
- la bande de roulement comprenant deux portions axialement extérieures ayant chacune une largeur axiale au plus égale à 0.3 fois la largeur axiale LT,
- au moins une portion axialement extérieure comprenant des découpures axialement extérieures, une découpure axialement extérieure formant un espace débouchant sur la surface de roulement et étant délimitée par au moins deux faces latérales dites principales reliées par une face de fond,
- les découpures axialement extérieures ayant une largeur moyenne W définie par la distance entre les deux faces latérales principales, une profondeur D définie par la distance radiale maximale entre la surface de roulement et la face de fond,
- le pneumatique comprenant en outre une armature de sommet radialement intérieure à la bande de roulement,
- l'armature de sommet comprenant une armature de travail et une armature de frettage,
- l'armature de travail étant constituée de 2 couches de travail, comprenant chacune des éléments de renforcement enrobés par un matériau élastomérique, parallèles entre eux et formant respectivement avec une direction circonférentielle (XX') du pneumatique, un angle orienté au moins égal à 20° et au plus égal à 50° en valeur absolue et de signe opposé d'une couche à la suivante,
- les dits éléments de renforcement de chaque nappe étant constitués par des fils métalliques unitaires ou monofilaments ayant une section dont la plus petite dimension est au moins égale à 0.20 mm et au plus égale à 0.5 mm, une résistance à la rupture Rm,
- la densité d'éléments de renforcement de chaque couche de travail étant au moins égale à 100 fils par dm et au plus égale à 200 fils par dm,
- l'armature de frettage comprenant au moins une couche de frettage comprenant des éléments de renforcement, parallèles entre eux et formant, avec la direction circonférentielle (XX') du pneumatique, un angle β au plus égal à 10° en valeur absolue,
- lorsque les découpures axialement extérieures ont une largeur moyenne W au plus égale à 1 mm, ces découpures axialement extérieures, appelées incisions, ont une profondeur D au moins égale à 5 mm et sont espacées, selon la direction circonférentielle (XX') du pneumatique, d'un pas circonférentiel P au moins égal à 4 mm,
- lorsque les découpures axialement extérieures ont une largeur moyenne W au moins égale à 1 mm, ces découpures axialement extérieures, appelées rainures, ont une profondeur D au plus égale à 5 mm,
- la résistance à rupture R_{C} de chaque couche de travail est au moins égale à 30 000 N/dm, Rc étant définie par: Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

Usuellement, les faces latérales principales sont sensiblement de même forme et distantes l'une de l'autre d'une distance égale à la largeur W de la découpure.

Pour les découpures de forme complexe, on entend par largeur de la découpure la distance moyenne des faces latérales principales moyennée sur la longueur curviligne moyenne des faces latérales principales de la découpure.

Du point de vue du fonctionnement mécanique, le flambement d'un élément de renforcement se produit en compression. Il ne se produit que radialement à l'intérieur des portions les plus axialement extérieures de la bande de roulement car c'est dans cette zone que les efforts de compression sont les plus importants en cas d'effort transversal. Ces portions les plus axialement extérieures ont chacune pour largeur axiale maximale 0.3 fois la largeur totale de la bande de roulement du pneumatique.

Le flambement est un phénomène complexe et instable qui conduit à une rupture par fatigue d'un objet ayant au moins une dimension d'un ordre de grandeur inférieur à une dimension principale comme les poutres ou les coques. Les monofilaments sont des objets de ce type avec une section très inférieur à leur longueur. Le phénomène commence par une mise en compression de la dimension principale. Il se poursuit en raison d'une dissymétrie de la géométrie du monofilament, ou de l'existence d'un effort transverse par une mise en flexion du monofilament, sollicitation très destructrice pour les matériaux métalliques. Ce phénomène complexe est notamment très dépendant des conditions aux limites, de la mobilité de l'élément, de la direction de l'effort appliqué et de la déformation résultante de cet effort. Si cette déformation ne s'effectue pas sensiblement suivant la direction de la dimension principale du monofilament alors le flambement n'aura pas lieu et, dans le cas des monofilaments entourés par une matrice de mélange caoutchouteux des couches de travail d'un pneumatique, l'effort est repris par le cisaillement du mélange caoutchouteux entre les monofilaments.

De plus le flambement des monofilaments des couches de travail ne se produit que dans les portions les plus souples de la bande de roulement. Ces portions peuvent correspondre à des portions axialement extérieures de la bande de roulement comprenant des découpures axialement extérieures, de largeur au moins égale à 1 mm et de profondeur D au moins égale à 5 mm, à savoir des rainures. Ces portions peuvent également correspondre à des portions axialement extérieures de la bande de roulement ayant une forte densité de découpures étroites, à savoir des incisions de profondeur D au moins égale à 5 mm et espacées, selon la direction circonférentielle (XX') du pneumatique, d'un pas circonférentiel P au plus égal à 4 mm. Le pas circonférentiel est la distance circonférentielle moyenne sur la portion la plus axialement extérieure considérée de la bande de roulement entre les profils linéaires moyens de deux incisions axialement extérieures circonférentiellement consécutives. Habituellement, les bandes de roulement des pneumatiques peuvent présenter des pas circonférentiels variables notamment pour limiter le bruit lors du roulage.

Une solution pour éviter le flambement des monofilaments des couches de travail est que les découpures axialement extérieures aient une largeur inférieure à 1 mm, ainsi elles se ferment dans l'aire de contact et donc protègent les monofilaments du flambement mais espacées, selon la direction circonférentielle (XX') du pneumatique, d'un pas circonférentiel P au moins égal à 4 mm, pour éviter un assouplissement de la portion de la bande de roulement. Il faut également que les rainures, découpures d'une largeur au moins égale à 1 mm, aient une profondeur D au plus égale à 5 mm.

Pour les découpures non axialement extérieures, l'effort de compression en cas d'effort transversal sur le pneumatique est trop faible pour provoquer le flambement. Par ailleurs il est courant sur les pneumatiques pour véhicule de tourisme que seules des incisions d'une largeur inférieure à 1 mm soient disposées dans les parties axialement centrales de la bande de roulement.

Les découpures axialement extérieures peuvent être de forme quelconque, courbe, sinusoïdale, en zigzag, permettre ou non par une conception adaptée les déplacements relatifs de leurs faces latérales principales lors du roulage. Pour empêcher un déplacement relatif des faces latérales principales d'une découpure, il suffit de créer un élément de sculpture tel qu'une des faces va venir s'appuyer sur l'autre quand le déplacement considéré va survenir. Les incisions en zigzag, ou sinusoïdales dans la longueur de la découpure, si les deux faces latérales principales sont conçues pour s'appuyer l'une sur l'autre, sont des exemples de ce type de découpures. Si l'ondulation de l'incision est dans le sens de la profondeur, les déplacements radiaux relatifs des faces latérales principales seront bloqués. Si l'incision présente une double ondulation dans le sens de sa longueur et suivant la profondeur alors les deux mouvements seront bloqués. Dans la mesure où c'est un grand déplacement autorisé du sommet qui cause le flambement des monofilaments des couches de travail et notamment ceux autorisés par la sculpture, tout blocage de déplacement dans la sculpture, peut amener une amélioration de la performance en endurance des monofilaments.

Les deux portions axialement extérieures de la bande de roulement peuvent éventuellement contenir un ou plusieurs sillons circonférentiels pour diminuer le risque d'hydroplanage sur sol mouillé. Pour des pneumatiques de tourisme, ces sillons circonférentiels représentent généralement une faible largeur de l'aire de contact et n'ont pas d'impact connu sur le flambement des monofilaments.

Les monofilaments peuvent avoir toute forme de section, sachant que les sections oblongues représentent un avantage sur les sections circulaires de même plus petite dimension car leur inertie de flexion et donc leur résistance au flambement sont supérieures. Pour une section circulaire, la plus petite dimension correspond au diamètre de la section. Pour garantir une résistance à rupture en fatigue des monofilaments et la tenue au cisaillement des mélanges caoutchouteux situés entre les filaments, la densité d'éléments de renforcement de chaque couche de travail est au moins égale à 100 fils par dm et au plus égale à 200 fils par dm. Par densité on entend le nombre moyen de monofilaments sur une largeur de couche de travail de 10 cm, cette largeur étant prise perpendiculairement à la direction des monofilaments de la couche de travail considérée. La distance entre des éléments de renforcement consécutifs peut être fixe ou variable. La pose des éléments de renforcement en fabrication peut être effectuée par couche, par bandelette ou de façon unitaire.

Par ailleurs la résistance au flambement d'un monofilament dépend également de la résistance des filaments axialement adjacents, un début de flambement pouvant en entraîner un autre par l'effet d'une répartition de la charge autour du monofilament qui flambe. Pour obtenir une performance en endurance améliorée, il convient non seulement d'observer des conditions de diamètres et de la densité des monofilaments mais également remplir une condition portant sur la résistance de la couche de travail à savoir la résistance à rupture R_{C} de chaque couche de travail qui doit être au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

Pour un pneumatique pour lequel aucun sens de montage n'est imposé, la solution consiste à appliquer l'invention sur les deux portions les plus axialement extérieures de la bande de roulement.

Pour un pneumatique pour lequel un sens de montage est imposé, une possibilité est de n'appliquer l'invention que sur la portion la plus axialement extérieure de la bande de roulement, située côté extérieur véhicule.

Les sculptures des bandes de roulement des pneumatiques de véhicule de tourisme sont habituellement soit sensiblement symétriques, soit sensiblement antisymétriques, soit sensiblement asymétriques.

Il est avantageux qu'une découpure axialement extérieure débouche axialement à l'extérieur d'une portion axialement extérieure de la bande de roulement afin de pouvoir évacuer l'eau stockée dans la découpure vers l'extérieur de l'aire de contact en cas de roulage sur une route mouillée.

Préférentiellement, lorsque la bande de roulement comprend au moins un sillon circonférentiel, une découpure axialement extérieure débouche axialement à l'intérieur d'un sillon circonférentiel de la bande de roulement afin de pouvoir évacuer l'eau stockée dans la découpure vers le principal moyen de stockage de l'eau en cas de roulage sur une route mouillée.

Pour la performance en adhérence il est également préféré que les incisions axialement extérieures soient espacées, selon la direction circonférentielle (XX') du pneumatique, d'un pas circonférentiel P au plus égal à 20 mm, afin d'éviter une trop faible densité des incisions amenant une performance en adhérence inadéquate.

Une solution préférée est, qu'une incision axialement extérieure soit pontée. Un pont de gomme dans une découpure correspond à une diminution locale de la profondeur de cette découpure. Cette solution très simple permet de limiter les déplacements relatifs des faces latérales principales dans toutes les directions. Elles ont en revanche le désavantage de s'opposer à la mise à plat et donc de pénaliser la résistance au roulement et de s'opposer à la circulation de l'eau dans le fond de la découpure. Pour faciliter la mise à plat et ainsi améliorer la résistance au roulement, les ponts de gomme peuvent comporter une incision.

Préférentiellement la profondeur D des incisions axialement extérieures est au plus égale à 8 mm pour éviter une trop grande souplesse de la sculpture et des pertes de performance en usure et en résistance au roulement.

Il est particulièrement avantageux que la distance radiale D1 entre la face de fond des incisions axialement extérieures et l'armature de sommet soit au moins égale à 1.5 mm. En effet cette quantité minimale de matériaux caoutchouteux permet de protéger le sommet des agressions et des perforations par des obstacles, cailloux, débris quelconques se trouvant sur le sol.

Il est préféré que la distance radiale D1 entre la face de fond des incisions axialement extérieures et de l'armature de sommet soit au plus égale à 3.5 mm pour obtenir un pneumatique performant en résistance au roulement.

Une solution préférée, notamment pour la performance en bruit, est que toutes les découpures axialement extérieures soient des incisions.

Avantageusement les deux portions axialement extérieures de la bande de roulement ont chacune une largeur axiale (LS1, LS2) au plus égale à 0.2 fois la largeur axiale LT de la bande de roulement.

Préférentiellement chaque couche de travail comprend des éléments de renforcement constitués par des fils métalliques unitaires ou monofilaments ayant une section dont la plus petite dimension est au moins égale à 0.3 mm et au plus égale à 0.37 mm qui constituent un optimum pour l'équilibre des performances visées : le gain de masse et l'endurance au flambement des éléments de renforcement des couches de travail.

Une solution préférée est que chaque couche de travail comprenne des éléments de renforcement formant, avec la direction circonférentielle (XX') du pneumatique, un angle au moins égal à 22° et au plus égal à 35° qui constituent un compromis optimal entre les performances de comportement et d'endurance du pneumatique.

Il est avantageux que la densité d'éléments de renforcement de chaque couche de travail soit au moins égale à 120 fils par dm et au plus égale à 180 fils par dm afin de garantir l'endurance des mélanges caoutchouteux travaillant en cisaillement entre les éléments de renforcement et l'endurance de ces derniers en traction et compression.

Les éléments de renforcement des couches de travail peuvent être rectilignes ou non. Ils peuvent être préformés, de forme sinusoïdale, zigzag, ondulée ou suivant une spirale. Les éléments de renforcement des couches de travail sont en acier, de préférence en acier au carbone tel que ceux utilisés dans les câbles type "steel cords" ; mais il est bien entendu possible d'utiliser d'autres aciers, par exemple des aciers inoxydables, ou d'autres alliages.

Lorsqu'un acier au carbone est utilisé, sa teneur en carbone (% en poids d'acier) est de préférence comprise dans un domaine de 0,8% à 1,2%. L'invention s'applique en particulier à des aciers du type steel cord à très haute résistance (dit "SHT" pour " Super High Tensile "), ultra-haute résistance (dit "UHT" pour "Ultra High Tensile " ou "MT" pour "Mega Tensile "). Les renforts en acier au carbone ont alors une résistance en traction (Rm) qui est de préférence supérieure à 3000 MPa, plus préférentiellement supérieure à 3500 MPa. Leur allongement total à la rupture (At), somme de l'allongement élastique et de l'allongement plastique, est de préférence supérieur à 2,0%.

Pour ce qui concerne les renforts en acier, les mesures de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en oeuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Préférentiellement les éléments de renforcement de la au moins une couche de frettage sont en textile de type polyamide aliphatique, polyamide aromatique, combinaison de polyamide aliphatique et de polyamide aromatique, polytéréphtalate d'éthylène ou rayonne car les matériaux textiles sont particulièrement adaptés à ce type d'usage en raison de leur faible masse et de leur rigidité élevée. La distance entre des éléments de renforcement consécutifs de la couche de frettage peut être fixe ou variable. La pose des éléments de renforcement en fabrication peut être effectuée par couche, par bandelette ou de façon unitaire.

Il est avantageux que l'armature de frettage soit radialement extérieure à l'armature de travail pour une bonne tenue de cette dernière en endurance.

### BREVE DESCRIPTION DES DESSINS

Les caractéristiques et autres avantages de l'invention seront mieux compris à l'aide des figures 1 à 4, les dites figures n'étant pas représentées à l'échelle mais de façon simplifiée, afin de faciliter la compréhension de l'invention :
- La figure 1 est une vue en perspective représentant une partie de pneumatique selon l'invention, en particulier son architecture et sa bande de roulement.
- La figure 2 représente la coupe méridienne du sommet et illustre les parties axialement extérieures 22 et 23 de la bande de roulement, ainsi que leur largeur.
- Les figures 3A et 3B présentent deux types de profils méridiens radialement extérieurs de la bande de roulement d'un pneumatique de tourisme.
- La figure 4 illustre les termes 'bord intérieur' et 'bord extérieur' d'une bande de roulement.

### DESCRIPTION DETAILLEE DES DESSINS

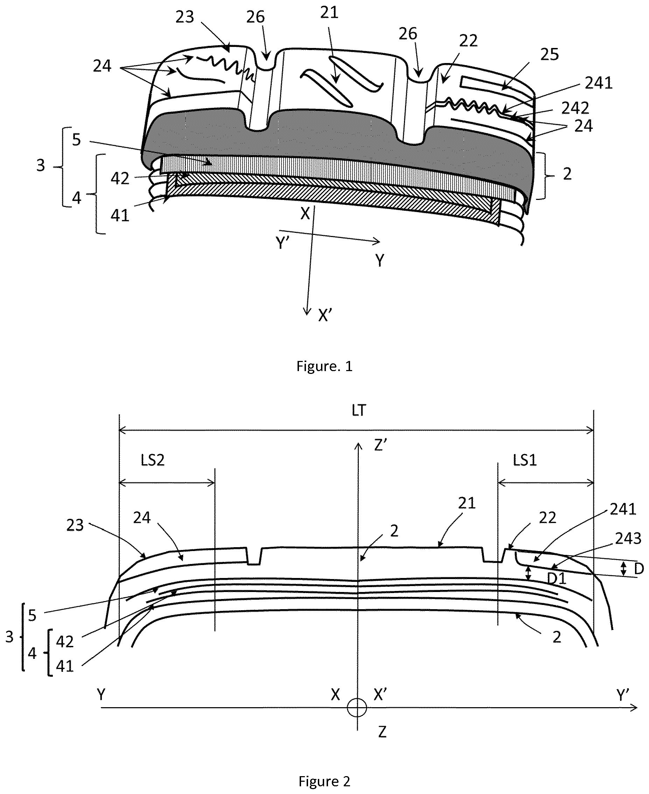

La figure 1 représente une partie du sommet d'un pneumatique. Le pneumatique comporte une bande de roulement 2 destinée à entrer en contact avec un sol par l'intermédiaire d'une surface de roulement 21. Dans les portions axialement extérieures 22 et 23 de la bande de roulement, sont disposées des découpures axialement extérieures dont des incisions 24 et des rainures 25. Le pneumatique comprend en outre une armature de sommet 3 comprenant une armature de travail 4 et une armature de frettage 5, l'armature de travail comprenant 2 couches de travail 41 et 42. La figure 1 représente en outre des découpures aveugles, borgnes, débouchantes axialement extérieurement ou intérieurement simples et complexes, à savoir à faces latérales parallèles ou à faces latérales avec des portions en zigzag ou sinusoïdales dans la direction principale de la découpure ou dans sa profondeur de manière à bloquer certains déplacements relatifs des 2 faces latérales.

La figure 1 représente dans les parties axialement extérieures 22 et 23 de la bande de roulement, uniquement des rainures axialement extérieures axiales, suivant l'axe axial (YY'). En réalité cette représentation est de pure convenance pour la lisibilité de la figure 1, les rainures axialement extérieures dans les bandes de roulement des véhicules de tourisme pouvant, en fonction des performances visées, notamment en adhérence sur sol mouillé, faire un angle avec la direction axiale (YY') compris entre plus ou moins 60°.

La figure 2 représente schématiquement, la coupe méridienne, du sommet du pneumatique selon l'invention. Elle illustre en particulier les largeurs LS1 et LS2 des portions axialement extérieures 23 et 24 de la bande de roulement, ainsi que la largeur totale de la bande de roulement du pneumatique LT. Sont représentées également la profondeur D d'une découpure axialement extérieure 24 et la distance D1 entre la face de fond 243 d'une découpure axialement extérieure 24 et l'armature de sommet 3 mesurée sur une coupe méridienne du pneumatique. Une coupe méridienne du pneumatique, est obtenue par découpage du pneumatique selon deux plans méridiens. A titre d'exemple, une coupe méridienne de pneumatique a une épaisseur selon la direction circonférentielle d'environ 60 mm au niveau de la bande de roulement. La mesure se fait en maintenant la distance entre les deux bourrelets identique à celle du pneumatique monté sur sa jante et faiblement gonflé.

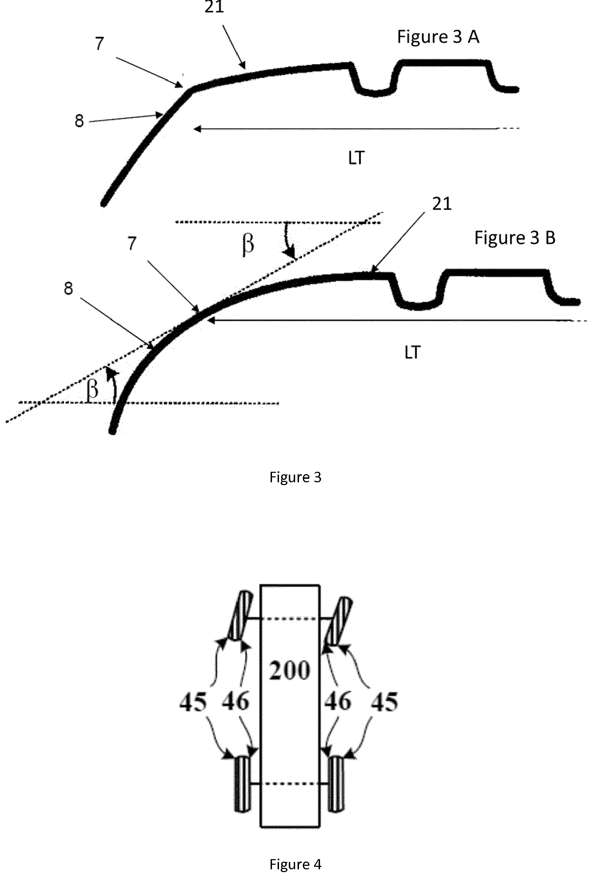

Sur les figures 3A et 3B, on détermine les bords axiaux 7 de la bande de roulement qui permettent de mesurer la largeur bande de roulement. Dans la figure 3A où la surface de roulement 21 est sécante avec la surface axiale extérieure du pneumatique 8, le bord axial 7 est trivialement déterminé par l'homme de l'art. Dans la figure 3B où la surface de roulement 21 est continue avec la surface axiale extérieure du pneumatique 8, on trace, sur une coupe méridienne du pneumatique, la tangente à la surface de roulement en tout point de ladite surface de roulement dans la zone de transition vers le flanc. Le premier bord axial 7 est le point pour lequel l' angle β entre ladite tangente et une direction axiale YY' est égal à 30°. Lorsqu'il existe plusieurs points pour lesquels l'angle β entre ladite tangente et une direction axiale est égal à 30°, on retient le point radialement le plus à l' extérieur. On procédera de la même manière pour déterminer le second bord axial de la bande de roulement.

La figure 4 représente schématiquement des pneumatiques montés sur des jantes de montage de roues d'un véhicule 200 et ayant un sens de montage prédéterminé sur le véhicule. Chaque pneumatique comporte un bord axial extérieur 45 et un bord axial intérieur 46, le bord axial intérieur 46 étant le bord monté du côté de la caisse du véhicule lorsque le pneumatique est monté sur le véhicule selon ledit sens de montage prédéterminé et inversement pour le bord axial extérieur 45. Dans le document « côté extérieur du véhicule » désigne le bord axial extérieur 45.

Les inventeurs ont réalisé des calculs sur la base de l'invention pour un pneumatique de dimension 205/55 R16, gonflé à une pression de 2 bars, comprenant deux couches de travail comprenant des monofilaments en acier, de diamètre 0.3 mm, répartis selon une densité de 158 fils au dm et formant, avec la direction circonférentielle XX', des angles respectivement égaux à 27° et -27°. Les monofilaments ont une résistance à la rupture Rₘ égale à 3500 MPa et les couches de travail ont chacune une résistance à rupture R_{c} égale à 39 000 N/dm. Le pneumatique comporte des découpures axialement extérieures sur les deux portions axialement extérieures de la bande de roulement du pneumatique ayant une largeur axiale égale à 0.21 fois la largeur axiale de la bande de roulement. La distance radiale D1 entre la face de fond des découpures axialement extérieures et l'armature de sommet est au moins égale à 2 mm.

Différents pneumatiques ont été calculés en faisant varier l'épaisseur et le pas circonférentiel des découpures. Le pneumatique A, selon l'état de la technique, comporte des rainures de section rectangulaire de largeur constante dans l'épaisseur égale à 3.5 mm et de profondeur égale à 6.5 mm. Le pas circonférentiel des rainures est de 27 mm pour 72 rainures sur la circonférence du pneumatique. Le pneumatique B, selon l'invention, comporte des incisions de section rectangulaire de largeur constante dans l'épaisseur égale à 1 mm. Le pas circonférentiel des incisions est de 7.8 mm pour 252 incisions sur la circonférence du pneumatique. Les pas des rainures et des incisions axialement extérieures sont tels que les taux d'entaillement volumique de la bande de roulement des pneumatiques A et B sont identiques. Les conditions de calcul reproduisent les conditions de roulage d'un pneumatique avant côté extérieur du virage, c'est-à-dire celui qui est le plus sollicité sur un véhicule de tourisme. Ces sollicitations, pour une accélération latérale de 0.7g, sont les suivantes : une charge (Fz) de 749 daN, un effort latéral (Fy) de 509 daN et un carrossage de 3.12°. L'épaisseur et le pas des découpures, ici des incisions, et leur pas circonférentiel dans le pneumatique B permet, à taux d'entaillement volumique constant, de réduire de 74% les contraintes de flexion dans les monofilaments de l'armature de travail par rapport au pneumatique A, contraintes de flexion qui causent leur rupture par fatigue.

## Revendications

1. Pneumatique (1) pour véhicule de tourisme, comprenant :
• une bande de roulement (2) destinée à entrer en contact avec un sol par l'intermédiaire d'une surface de roulement (21) et ayant une largeur axiale LT,
• la bande de roulement (2) comprenant deux portions axialement extérieures (22, 23) ayant chacune une largeur axiale (LS1, LS2) au plus égale à 0.3 fois la largeur axiale LT,
• au moins une portion axialement extérieure (22, 23) comprenant des découpures axialement extérieures (24,25), une découpure axialement extérieure (24,25) formant un espace débouchant sur la surface de roulement (21) et étant délimitée par au moins deux faces latérales dites principales (241, 242) reliées par une face de fond (243),
• les découpures axialement extérieures (24,25) ayant une largeur moyenne W définie par la distance entre les deux faces latérales principales (241, 242), une profondeur D définie par la distance radiale maximale entre la surface de roulement (21) et la face de fond (243), et faisant un angle avec la direction axiale (YY') compris entre plus ou moins 60°,
• le pneumatique comprenant en outre une armature de sommet (3) radialement intérieure à la bande de roulement (2),
• l'armature de sommet (3) comprenant une armature de travail (4) et une armature de frettage (5),
• l'armature de travail (4) étant constituée de 2 couches de travail (41, 42), comprenant chacune des éléments de renforcement (411, 421) enrobés par un matériau élastomérique, parallèles entre eux et formant respectivement avec une direction circonférentielle (XX') du pneumatique, un angle orienté (A1, A2) au moins égal à 20° et au plus égal à 50° en valeur absolue et de signe opposé d'une couche à la suivante,
• les dits éléments de renforcement de chaque nappe étant constitués par des fils métalliques unitaires ou monofilaments ayant une section dont la plus petite dimension est au moins égale à 0.20 mm et au plus égale à 0.5 mm, une résistance à la rupture Rm,
• la densité d'éléments de renforcement de chaque couche de travail étant au moins égale à 100 fils par dm et au plus égale à 200 fils par dm,
• l'armature de frettage (5) comprenant au moins une couche de frettage comprenant des éléments de renforcement, parallèles entre eux et formant, avec la direction circonférentielle (XX') du pneumatique, un angle B au plus égal à 10° en valeur absolue,
**caractérisé en ce que,** lorsque les découpures axialement extérieures (24) ont une largeur moyenne W au plus égale à 1 mm, ces découpures axialement extérieures (24), appelées incisions, ont une profondeur D au moins égale à 5 mm et sont espacées, selon la direction circonférentielle (XX') du pneumatique, d'un pas circonférentiel P au moins égal à 4 mm
**et en ce que,** lorsque les découpures axialement extérieures (25) ont une largeur moyenne W au moins égale à 1 mm, ces découpures axialement extérieures (25), appelées rainures, ont une profondeur D au plus égale à 5 mm,
**et en ce que** la résistance à rupture R_{C} de chaque couche de travail (41, 42) est au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

2. Pneumatique selon la revendication 1 **dans lequel** au moins une découpure axialement extérieure (24, 25) débouche axialement à l'extérieur d'une portion axialement extérieure (22, 23) de la bande de roulement (2).

3. Pneumatique selon l'une des revendications 1 ou 2, la bande de roulement comprenant au moins un sillon circonférentiel (26), **dans lequel** au moins une découpure axialement extérieure (24, 25) débouche axialement à l'intérieur d'un sillon circonférentiel (26) de la bande de roulement (2).

4. Pneumatique selon l'une quelconque des revendications 1 à 3 **dans lequel** les incisions axialement extérieures (24) sont espacées, selon la direction circonférentielle (XX') du pneumatique, d'un pas circonférentiel P au plus égal à 20 mm.

5. Pneumatique selon l'une quelconque des revendications 1 à 4 **dans lequel** au moins une incision axialement extérieure (24) est pontée.

6. Pneumatique selon l'une quelconque des revendications 1 à 5 **dans lequel** la profondeur D des incisions axialement extérieures (24) est au plus égale à 8 mm.

7. Pneumatique selon l'une quelconque des revendications 1 à 6 **dans lequel** la distance radiale D1 entre la face de fond (243) des incisions axialement extérieures (24) et l'armature de sommet (3) est au moins égale à 1.5 mm.

8. Pneumatique selon l'une quelconque des revendications 1 à 7 **dans lequel** la distance radiale D1 entre la face de fond (243) des incisions axialement extérieures (24) et l'armature de sommet (3.) est au plus égale à 3.5 mm.

9. Pneumatique selon l'une quelconque des revendications 1 à 8 **dans lequel** toutes les découpures axialement extérieures (24) sont des incisions.

10. Pneumatique selon l'une quelconque des revendications 1 à 9 **dans lequel** les deux portions axialement extérieures (22, 23) de la bande de roulement (2) ont chacune une largeur axiale (LS1, LS2) au plus égale à 0.2 fois la largeur axiale LT.

11. Pneumatique selon l'une quelconque des revendications 1 à 10 **dans lequel** chaque couche de travail (41, 42) comprend des éléments de renforcement (411, 421), constitués par des fils métalliques unitaires ou monofilaments ayant un diamètre au moins égal à 0.3 mm et au plus égal à 0.37 mm.

12. Pneumatique selon l'une quelconque des revendications 1 à 11 **dans lequel** chaque couche de travail (41, 42) comprend des éléments de renforcement (411, 421), formant, avec la direction circonférentielle (XX') du pneumatique, un angle (A1, A2) au moins égal à 22° et au plus égal à 35°.

13. Pneumatique selon l'une quelconque des revendications 1 à 12 **dans lequel** la densité d'éléments de renforcement de chaque couche de travail (41, 42) est au moins égale à 120 fils par dm et au plus égale à 180 fils par dm.

14. Pneumatique selon l'une quelconque des revendications 1 à 13 **dans lequel** les éléments de renforcement des couches de travail (41, 42) sont en acier, de préférence en acier au carbone.

15. Pneumatique selon l'une quelconque des revendications 1 à 14 **dans lequel** les éléments de renforcement de la au moins une couche de frettage sont en textile, de préférence de type polyamide aliphatique, polyamide aromatique, combinaison de polyamide aliphatique et de polyamide aromatique, polytéréphtalate d'éthylène ou rayonne.

16. Pneumatique selon l'une quelconque des revendications 1 à 15 **dans lequel** l'armature de frettage (5) est radialement extérieure à l'armature de travail (4).

## Patentansprüche

1. Reifen (1) für einen Personenkraftwagen, umfassend:
• einen Laufstreifen (2), der dazu bestimmt ist, über eine Lauffläche (21) mit einem Boden in Kontakt zu kommen, und eine axiale Breite LT aufweist,
• wobei der Laufstreifen (2) zwei axial äußere Abschnitte (22, 23) umfasst, die jeweils eine axiale Breite (LS1, LS2) aufweisen, die höchstens das 0,3-Fache der axialen Breite LT beträgt,
• wobei wenigstens ein axial äußerer Abschnitt (22, 23) axial äußere Ausschnitte (24, 25) umfasst, wobei ein axial äußerer Ausschnitt (24, 25) einen Raum bildet, der auf der Lauffläche (21) mündet und von wenigstens zwei sogenannten Hauptseitenflächen (241, 242) begrenzt wird, die durch eine Bodenfläche (243) verbunden sind,
• wobei die axial äußeren Ausschnitte (24, 25) eine mittlere Breite W, die durch den Abstand zwischen den zwei Hauptseitenflächen (241, 242) definiert ist, und eine Tiefe D, die durch den maximalen radialen Abstand zwischen der Lauffläche (21) und der Bodenfläche (243) definiert ist, aufweisen und einen Winkel mit der axialen Richtung (YY') bilden, der zwischen plus oder minus 60° liegt,
• wobei der Reifen außerdem eine Scheitelbewehrung (3) umfasst, die sich radial innerhalb des Laufstreifens (2) befindet,
• wobei die Scheitelbewehrung (3) eine Arbeitsbewehrung (4) und eine Versteifungsbewehrung (5) umfasst,
• wobei die Arbeitsbewehrung (4) aus zwei Arbeitsschichten (41, 42) besteht, die jeweils Verstärkungselemente (411, 421) umfassen, die von einem Elastomermaterial umhüllt sind, zueinander parallel sind und jeweils mit einer Umfangsrichtung (XX') des Reifens einen gerichteten Winkel (A1, A2) bilden, dessen absoluter Betrag mindestens gleich 20° und höchstens gleich 50° ist und dessen Vorzeichen von einer Schicht zur folgenden wechselt,
• wobei die Verstärkungselemente jeder Lage aus einzelnen Metalldrähten oder Monofilamenten bestehen, die einen Querschnitt, dessen kleinste Abmessung mindestens 0,20 mm und höchstens 0,5 mm beträgt, und eine Bruchfestigkeit Rm aufweisen,
• wobei die Dichte der Verstärkungselemente jeder Arbeitsschicht mindestens 100 Drähte pro dm und höchstens 200 Drähte pro dm beträgt,
• wobei die Versteifungsbewehrung (5) wenigstens eine Versteifungsschicht umfasst, die Verstärkungselemente umfasst, die zueinander parallel sind und mit der Umfangsrichtung (XX') des Reifens einen Winkel B bilden, dessen absoluter Betrag höchstens gleich 10° ist,
**dadurch gekennzeichnet, dass**, wenn die axial äußeren Ausschnitte (24) eine mittlere Breite W aufweisen, die höchstens 1 mm beträgt, diese axial äußeren Ausschnitte (24), Einschnitte genannt, eine Tiefe D aufweisen, die mindestens 5 mm beträgt, und in der Umfangsrichtung (XX') des Reifens mit einer Umfangsteilung P beabstandet sind, die mindestens 4 mm beträgt,
und dadurch, dass, wenn die axial äußeren Ausschnitte (25) eine mittlere Breite W aufweisen, die mindestens 1 mm beträgt, diese axial äußeren Ausschnitte (25), Rillen genannt, eine Tiefe D aufweisen, die höchstens 5 mm beträgt,
und dadurch, dass die Bruchfestigkeit R_{C} jeder Arbeitsschicht (41, 42) mindestens 30 000 N/dm beträgt, wobei Rc durch Rc = Rm*S*d definiert ist, wobei Rm die Zugfestigkeit der Monofilamente in MPa ist, S der Querschnitt der Monofilamente in mm² ist und d die Dichte der Monofilamente der betrachteten Arbeitsschicht ist, als Anzahl der Monofilamente pro dm.

2. Reifen nach Anspruch 1, wobei wenigstens ein axial äußerer Ausschnitt (24, 25) axial auf der Außenseite eines axial äußeren Abschnitts (22, 23) des Laufstreifens (2) mündet.

3. Reifen nach Anspruch 1 oder 2, wobei der Laufstreifen wenigstens eine umlaufende Rille (26) umfasst, wobei wenigstens ein axial äußerer Ausschnitt (24, 25) axial in das Innere einer umlaufenden Rille (26) des Laufstreifens (2) mündet.

4. Reifen nach einem der Ansprüche 1 bis 3, wobei die axial äußeren Einschnitte (24) in der Umfangsrichtung (XX') des Reifens mit einer Umfangsteilung P beabstandet sind, die höchstens 20 mm beträgt.

5. Reifen nach einem der Ansprüche 1 bis 4, wobei wenigstens ein axial äußerer Einschnitt (24) überbrückt ist.

6. Reifen nach einem der Ansprüche 1 bis 5, wobei die Tiefe D der axial äußeren Einschnitte (24) höchstens 8 mm beträgt.

7. Reifen nach einem der Ansprüche 1 bis 6, wobei der radiale Abstand D1 zwischen der Bodenfläche (243) der axial äußeren Einschnitte (24) und der Scheitelbewehrung (3) mindestens 1,5 mm beträgt.

8. Reifen nach einem der Ansprüche 1 bis 7, wobei der radiale Abstand D1 zwischen der Bodenfläche (243) der axial äußeren Einschnitte (24) und der Scheitelbewehrung (3) höchstens 3,5 mm beträgt.

9. Reifen nach einem der Ansprüche 1 bis 8, wobei alle axial äußeren Ausschnitte (24) Einschnitte sind.

10. Reifen nach einem der Ansprüche 1 bis 9, wobei die zwei axial äußeren Abschnitte (22, 23) des Laufstreifens (2) jeweils eine axiale Breite (LS1, LS2) aufweisen, die höchstens das 0,2-Fache der axialen Breite LT beträgt.

11. Reifen nach einem der Ansprüche 1 bis 10, wobei jede Arbeitsschicht (41, 42) Verstärkungselemente (411, 421) umfasst, die aus einzelnen Metalldrähten oder Monofilamenten bestehen, die einen Durchmesser aufweisen, der mindestens 0,3 mm und höchstens 0,37 mm beträgt.

12. Reifen nach einem der Ansprüche 1 bis 11, wobei jede Arbeitsschicht (41, 42) Verstärkungselemente (411, 421) umfasst, die mit der Umfangsrichtung (XX') des Reifens einen Winkel (A1, A2) bilden, der mindestens 22° und höchstens 35° beträgt.

13. Reifen nach einem der Ansprüche 1 bis 12, wobei die Dichte der Verstärkungselemente jeder Arbeitsschicht (41, 42) mindestens 120 Drähte pro dm und höchstens 180 Drähte pro dm beträgt.

14. Reifen nach einem der Ansprüche 1 bis 13, wobei die Verstärkungselemente der Arbeitsschichten (41, 42) aus Stahl bestehen, vorzugsweise aus Kohlenstoffstahl.

15. Reifen nach einem der Ansprüche 1 bis 14, wobei die Verstärkungselemente der wenigstens einen Versteifungsschicht aus textilem Material bestehen, vorzugsweise vom Typ eines aliphatischen Polyamids, eines aromatischen Polyamids, einer Kombination von aliphatischem Polyamid und aromatischem Polyamid, aus Ethylenpolyterephthalat oder Kunstseide.

16. Reifen nach einem der Ansprüche 1 bis 15, wobei sich die Versteifungsbewehrung (5) radial außerhalb der Arbeitsbewehrung (4) befindet.

## Claims

1. Tyre (1) for a passenger vehicle, comprising:
• a tread (2) intended to come into contact with the ground via a tread surface (21) and having an axial width LT,
• the tread (2) comprising two axially exterior portions (22, 23) each having an axial width (LS1, LS2) at most equal to 0.3 times the axial width LT,
• at least one axially exterior portion (22, 23) comprising axially exterior cuts (24, 25), an axially exterior cut (24, 25) forming a space opening onto the tread surface (21) and being delimited by at least two main faces referred to as lateral faces (241, 242) connected by a bottom face (243),
• the axially exterior cuts (24, 25) having a mean width W, defined by the distance between the two main lateral faces (241, 242), a depth D defined by the maximum radial distance between the tread surface (21) and the bottom face (243) and making with the axial direction (YY') an angle of between plus or minus 60°,
• the tyre further comprising a crown reinforcement (3) radially on the inside of the tread (2),
• the crown reinforcement (3) comprising a working reinforcement (4) and a hoop reinforcement (5),
• the working reinforcement (4) being made up of two working layers (41, 42) each comprising reinforcing elements (411, 421) which are coated in an elastomeric material, mutually parallel and respectively form, with a circumferential direction (XX') of the tyre, an oriented angle (A1, A2) at least equal to 20° and at most equal to 50°, in terms of absolute value, and of opposite sign from one layer to the next,
• the said reinforcing elements in each ply being made up of individual metal threads or monofilaments having a cross section the smallest dimension of which is at least equal to 0.20 mm and at most equal to 0.5 mm, and a breaking strength Rm,
• the density of reinforcing elements in each working layer being at least equal to 100 threads per dm and at most equal to 200 threads per dm,
• the hoop reinforcement (5) comprising at least one hooping layer comprising reinforcing elements which are mutually parallel and form, with the circumferential direction (XX') of the tyre, an angle B at most equal to 10°, in terms of absolute value,
**characterized in that** when the axially exterior cuts (24) have a mean width W at most equal to 1 mm, these axially exterior cuts (24), referred to as sipes, have a depth D at least equal to 5 mm and are spaced apart, in the circumferential direction (XX') of the tyre, by a circumferential spacing P at least equal to 4 mm,
**and in that**, when the axially exterior cuts (25) have a mean width W at least equal to 1 mm, these axially exterior cuts (25), referred to as grooves, have a depth D at most equal to 5 mm,
**and in that** the breaking strength R_{C} of each working layer (41, 42) is at least equal to 30 000 N/dm, Rc being defined by : Rc= Rm*S*d, where Rm is the tensile breaking strength of the monofilaments in MPa, S is the cross-sectional area of the monofilaments in mm² and d is the density of monofilaments in the working layer considered, in number of monofilaments per dm.

2. Tyre according to Claim 1, **in which** at least one axially exterior cut (24, 25) opens axially to the outside of an axially exterior portion (22, 23) of the tread (2).

3. Tyre according to one of Claims 1 and 2, the tread comprising at least one circumferential groove (26), **in which** at least one axially exterior cut (24, 25) opens axially into a circumferential groove (26) of the tread (2).

4. Tyre according to any one of Claims 1 to 3, **in which** the axially exterior sipes (24) are spaced apart, in the circumferential direction (XX') of the tyre, by a circumferential spacing P at most equal to 20 mm.

5. Tyre according to any one of Claims 1 to 4, **in which** at least one axially exterior sipe (24) is bridged.

6. Tyre according to any one of Claims 1 to 5, **in which** the depth D of the axially exterior sipes (24) is at most equal to 8 mm.

7. Tyre according to any one of Claims 1 to 6, **in which** the radial distance D1 between the bottom face (243) of the axially exterior sipes (24) and the crown reinforcement (3) is at least equal to 1.5 mm.

8. Tyre according to any one of Claims 1 to 7, **in which** the radial distance D1 between the bottom face (243) of the axially exterior sipes (24) and the crown reinforcement (3) is at most equal to 3.5 mm.

9. Tyre according to any one of Claims 1 to 8, **in which** all of the axially exterior cuts (24) are sipes.

10. Tyre according to any one of Claims 1 to 9, **in which** the two axially exterior portions (22, 23) of the tread (2) each have an axial width (LS1, LS2) at most equal to 0.2 times the axial width LT.

11. Tyre according to any one of Claims 1 to 10, **in which** each working layer (41, 42) comprises reinforcing elements (411, 421) made up of individual metal threads or monofilaments having a diameter at least equal to 0.3 mm and at most equal to 0.37 mm.

12. Tyre according to any one of Claims 1 to 11, **in which** each working layer (41, 42) comprises reinforcing elements (411, 421) which form, with the circumferential direction (XX') of the tyre, an angle (A1, A2) at least equal to 22° and at most equal to 35°.

13. Tyre according to any one of Claims 1 to 12, **in which** the density of reinforcing elements in each working layer (41, 42) is at least equal to 120 threads per dm and at most equal to 180 threads per dm.

14. Tyre according to any one of Claims 1 to 13, **in which** the reinforcing elements of the working layers (41, 42) are made of steel, preferably carbon steel.

15. Tyre according to any one of Claims 1 to 14, **in which** the reinforcing elements of the at least one hooping layer are made of textile, preferably of aliphatic polyamide, aromatic polyamide or combination of aliphatic polyamide and of aromatic polyamide, polyethylene terephthalate or rayon type.

16. Tyre according to any one of Claims 1 to 15, **in which** the hoop reinforcement (5) is radially on the outside of the working reinforcement (4).
